# EUROPÄISCHE PATENTSCHRIFT

(11) **EP 1 894 824 B1**
(45) Veröffentlichungstag und Bekanntmachung des Hinweises auf die Patenterteilung: **06.06.2012**
(21) Anmeldenummer: 07114955.3
(22) Anmeldetag: 24.08.2007
(51) Int. Cl.: B62J 11/00, B62K 21/12

(54) **Fahrradlenker**
Bicycle handlebars
Guidon de vélo

(30) Priorität: 30.08.2006 DE 202006013277 U
(43) Veröffentlichungstag der Anmeldung: 05.03.2008
(73) Patentinhaber: Canyon Bicycles GmbH, 56073 Koblenz (DE)
(72) Erfinder: Smolik, Hans-Christian, 84163 Freinberg-Marklkofen (DE)
(74) Vertreter: von Kreisler Selting Werner

(56) Entgegenhaltungen:
- FR-A- 2 678 231
- US-A- 5 887 774
- US-A1- 2007 012 740
- US-B1- 6 357 708

## Beschreibung

Die Erfindung betrifft einen Fahrradlenker, insbesondere einen Rennradlenker.

Beim sportlichen Fahrradfahren, insbesondere dem Rennradfahren, ist es erforderlich, Flüssigkeit mitzuführen. Hierzu ist es bekannt, Trinkflaschen in einer üblicherweise am Unterrohr oder am Sattelrohr befestigten Halterung vorzusehen.

Insbesondere bei Rennräder besteht neben der Anforderung, dass das Rad ein möglichst geringes Gewicht aufweist, auch die Anforderung einer möglichst aerodynamischen Ausgestaltung des Fahrrades. Durch das Vorsehen von Trinkflaschen und Trinkflaschenhalterungen am Unter- oder Sattelrohr des Fahrradrahmens wird die Aerodynamik erheblich beeinträchtigt.

Aus FR 2678231 ist ein Triathlon-Lenker mit integrierter Trinkflasche bekannt. Hierbei handelt es sich um ein einstückig ausgebildeten Lenker, der zwischen den Unterarmauflagen einen Hohlraum aufweist, in dem Flüssigkeit angeordnet werden kann.

Aufgabe der Erfindung ist es, die Aerodynamik von Fahrrädern, insbesondere von Rennrädern zu verbessern, wobei insbesondere die durch Trinkflaschen hervorgerufenen aerodynamischen negativen Einflüsse verringert werden sollen.

Die Lösung der Aufgabe erfolgt erfindungsgemäß durch die Merkmale des Anspruchs 1.

Erfindungsgemäß ist ein Flüssigkeitsaufbewahrungsbehälter mit dem Fahrradlenker lösbar verbunden. Der Fahrradlenker weist ein Querelement, d. h. ein quer zur Fahrtrichtung angeordnetes Bauteil auf. Mit diesem Querelement sind mindestens zwei Greifelemente verbunden. Erfindungsgemäß ist der Flüssigkeitsaufbewahrungsbehälter aerodynamisch ausgebildet und mit dem Querelement verbunden. Das Vorsehen des Flüssigkeitsaufbewahrungsbehälters am Lenker hat zunächst den Vorteil, dass die Formgestaltung des Flüssigkeitsaufbewahrungsbehälters derart gewählt werden kann, dass der aerodynamische Einfluss des Flüssigkeitsaufbewahrungsbehälters möglichst gering ist. Die durch an dem Unter- oder Sattelrohr vorgesehenen Trinkflaschen auftretenden aerodynamischen Negativeinflüsse, wie Verwirbelungen oder dergleichen, können somit vermieden werden. Hierdurch ist die Aerodynamik des Fahrrades deutlich verbessert. Ferner weist das Vorsehen des Flüssigkeitsaufbewahrungsbehälters im Bereich des Fahrradlenkers den Vorteil auf, dass dieser ggf. zum Trinken nicht einer Halterung entnommen werden muss, sondern unmittelbar ein Trinkhalm oder dergleichen mit dem Flüssigkeitsaufbewahrungsbehälter verbunden werden kann. Das Zunehmen von Flüssigkeit kann somit auf äußerst einfache Weise während der Fahrt erfolgen.

Erfindungsgemäß weist das Querelement zusammen mit dem Flüssigkeitsaufbewahrungsbehälter im verbundenen Zustand eine aerodynamischen Querschnitt auf. Ferner weist das Querelement selbst erfindungsgemäß einen aerodynamischen Querschnitt auf.

Vorzugsweise ist der Flüssigkeitsaufnahmebehälter quer zur Fahrtrichtung ausgerichtet. Die Ausdehnungen des Flüssigkeitsaufnahmebehälters sind somit quer zur Fahrtrichtung, d.h. in horizontaler Richtung größer als in vertikaler Richtung. In Längsrichtung des Fahrradrahmens, d.h. in Fahrtrichtung, sind die Abmessungen des Flüssigkeitsaufnahmebehälters vorzugsweise ebenfalls kleiner als quer zur Fahrtrichtung. Insbesondere weist das Querelement des Fahrradlenkers in Fahrtrichtung eine größere Länge als senkrecht hierzu, d.h. in vertikaler Richtung, auf. Das Querelement ist somit in Fahrtrichtung langgestreckt ausgebildet. Vorzugsweise überdeckt der Flüssigkeitsaufbewahrungsbehälter das Querelement in Fahrtrichtung zumindest teilweise. Insbesondere überdeckt der Flüssigkeitsaufnahmebehälter das Querelement in Fahrtrichtung im Wesentlichen vollständig. Hierbei ist in bevorzugter Ausführungsform die Ausgestaltung des Flüssigkeitsaufnahmebehälters sowie des Querelements derart ausgestaltet, dass der Flüssigkeitsaufnahmebehälter und das Querelement in Fahrtrichtung eine aerodynamisch ausgebildete Einheit bilden. Hinsichtlich des Querelements ist dies nur für den Bereich bevorzugt, in dem das Querelement von dem Flüssigkeitsaufnahmebehälter überdeckt ist.

Der Flüssigkeitsaufbewahrungsbehälter, der vorzugsweise lösbar mit dem Querelement verbunden ist, kann an unterschiedlichen Seiten mit dem Querelement verbunden sein, wobei es bevorzugt ist, dass der Flüssigkeitsaufbewahrungsbehälter im wesentlichen an einer Unterseite des Querelements angeordnet ist.

In besonders bevorzugter Ausführungsform geht eine Querseite des Querelements, d. h. eine quer zur Fahrtrichtung verlaufende Seite des Querelements stufenfrei in eine Querseite des Flüssigkeitsaufbewahrungsbehälters über. Insbesondere findet der stufenfreie Übergang zwischen einer Querseite des Querelements und einer Querseite des Flüssigkeitsaufbewahrungsbehälters an der Vorderseite des Querelements statt. Hierbei überdeckt der Flüssigkeitsaufbewahrungsbehälter vorzugsweise die Vorderseite des Querelements. Insbesondere kann der Flüssigkeitsaufbewahrungsbehälter derart ausgebildet sein, dass er die Vorderseite des Querelements umgreift. Im verbundenen Zustand, d. h. wenn der Flüssigkeitsaufbewahrungsbehälter mit dem Querelement des Fahrradlenkers verbunden ist, weist das Querelement zusammen mit dem Flüssigkeitsaufbewahrungsbehälter gemeinsam einen aerodynamischen, insbesondere tropfenförmigen Querschnitt auf. Bei einem tropfenförmigen Querschnitt ist die Tropfenspitze in Fahrtrichtung vorzugsweise nach hinten gerichtet.

Vorzugsweise ist der Übergang zwischen dem Querelement und dem Flüssigkeitsaufbewahrungsbehälter nicht nur an einer Vorder- oder Oberseite, sondern auch an einer Rückseite stufenfrei, um Verwirbelungen zu vermeiden und eine möglichst günstige aerodynamische Ausgestaltung vorzusehen. In einer weiteren bevorzugten Ausführungsform weist die Rückseite des Querelements und/oder des Flüssigkeitsaufbewahrungsbehälters eine Abrisskante auf. Insbesondere kann die Abrisskante gemeinsam in dem Bereich ausgebildet sein, in dem das Querelement den Flüssigkeitsaufbewahrungsbehälter berührt.

Vorzugsweise ist das Querelement selbst ebenfalls aerodynamisch, insbesondere tropfenförmig ausgebildet, so dass auch beim Benutzen des Fahrrads ohne Flüssigkeitsaufbewahrungsbehälter eine gute Aerodynamik gewährleistet ist.

Zur Entnahme der Flüssigkeit weist der Flüssigkeitsaufbewahrungsbehälter vorzugsweise eine Öffnung auf, durch die ein Trinkhalm oder dergleichen eingeführt werden kann. Die Öffnung ist hierbei vorzugsweise in der Nähe des Lenkervorbaus angeordnet, um ein einfaches Trinken während der Fahrt zu ermöglichen.

Zur lösbaren Befestigung des Flüssigkeitsaufbewahrungsbehälters mit dem Querelement sind beispielsweise einrastende Klemmelemente vorgesehen. Dies kann jedoch zu geringen Verwirbelungen führen, so dass in besonders bevorzugter Ausführungsform eine in eine Öffnung des Querelements integrierte Befestigungseinrichtung vorgesehen ist. Beispielsweise weist die Befestigungseinrichtung einen mittig, d. h. im Bereich des Lenkervorbaus mit dem Flüssigkeitsaufbewahrungsbehälter verbundenen Gewindestift auf. Dieser ragt durch eine Öffnung des Querelements, so dass durch eine Mutter ein Fixieren des Flüssigkeitsaufbewahrungsbehälters an dem Querelement möglich ist. Selbstverständlich kann der Stift anstelle eines Gewindes auch ein Rastelement, einen Bajonettverschluss oder dergleichen aufweisen. Das beispielsweise als Mutter, Schraube oder dergleichen ausgebildete Halteelement ist vorzugsweise in einer Vertiefung des Querelements angeordnet, um aerodynamische Beeinträchtigungen zu vermeiden.

In einer weiteren bevorzugten Ausführungsform ist die Öffnung zum Hindurchführen des Trinkhalms oder desgleichen in die Befestigungseinrichtung integriert. Hierdurch kann die Herstellung vereinfacht, sowie das Entstehen von aerodynamischen Störungen durch die Trinkhalmöffnung vermieden werden. Beispielsweise ist ein Stift der Befestigungseinrichtung, der in eine Öffnung des Querelements ragt, hohl ausgebildet, so dass der Trinkhalm hindurch geführt werden kann.

Besonders bevorzugt ist es, dass die Formgestaltung des Flüssigkeitsaufbewahrungsbehälters derart gewählt ist, dass ein Sammelbereich ausgebildet ist, in dem sich die gesamte Flüssigkeit sammelt. In diesem Bereich endet vorzugsweise der Trinkhalm. Die Innenseite des Flüssigkeitsaufbewahrungsbehälters ist vorzugsweise derart ausgebildet, dass sich keine Totbereiche bilden können, in denen Flüssigkeit verbleibt. Vielmehr ist die Innenseite derart ausgebildet, dass die gesamte Flüssigkeit in den Sammelbereich fließt.

Bei einer weiteren bevorzugten Ausführungsform, durch die die Aerodynamik des Lenkers weiter verbessert werden kann, ist der Vorbau, der zum Befestigen des Lenkers mit dem Gabelrohr dient, einstückig mit dem Querelement ausgebildet. Insbesondere ist der Lenker zusätzlich, um Gewicht einzusparen, aus einem Faserverbund-Werkstoff, insbesondere einem Kohlenfaserwerkstoff hergestellt. Die einstückige Ausbildung des Querelements mit dem Vorbau stellt eine unabhängige Erfindung dar, die von dem Verbinden eines Flüssigkeitsaufbewahrungsbehälters mit dem Fahrradlenker unabhängig ist.

Vorzugsweise weist der Vorbau eine Einführöffnung zum Einführen von Sehalt- und/oder Bremskabeln, bzw. entsprechenden Leitungen auf, so dass die Kabel bzw. Leitungen innerhalb des Lenkers zu den Schalt- oder Bremshebeln geführt werden können.

Nachfolgend wird die Erfindung anhand bevorzugter Ausführungsformen unter Bezugnahme auf die anliegenden Zeichnungen näher erläutert.

Es zeigen:
- Fig. 1: eine schematische Draufsicht eines erfindungsgemäßen Lenkers, wobei es sich im dargestellten Ausführungsbeispiel um einen sogenannten Triathlonlenker handelt,
- Fig. 2: eine schematische Vorderansicht in Richtung des Pfeils II in Fig. 1,
- Fig. 3: eine schematische Querschnittsansicht entlang der Linie III-III in Fig. 2, und
- Fig. 4: eine schematische Vorderansicht einer zweiten bevorzugten Ausführungsform.

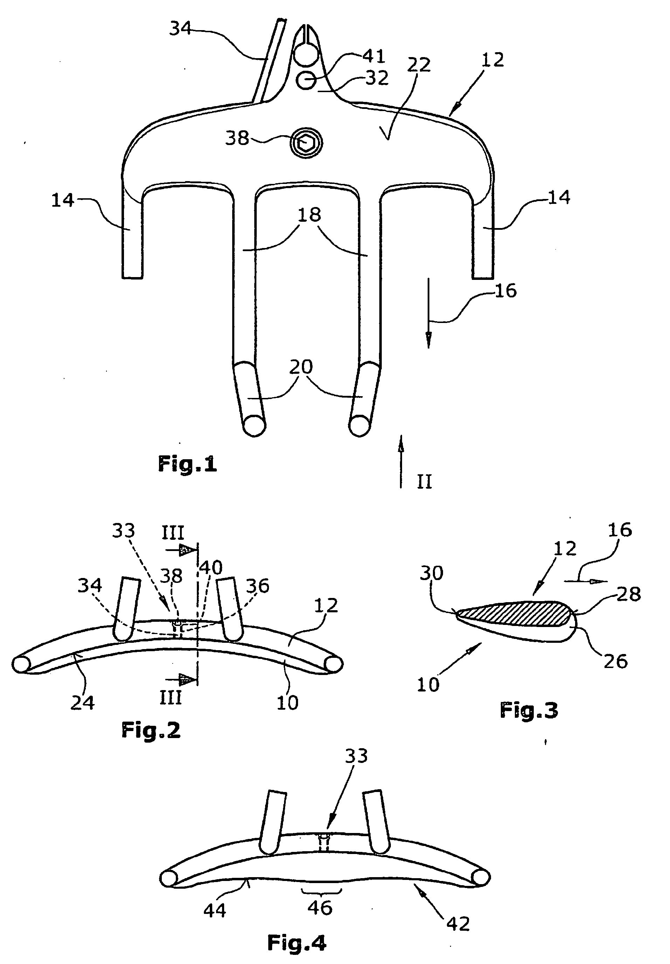

Bei einem Fahrradlenker mit erfindungsgemäß integriertem Flüssigkeitsaufbewahrungsbehälter 10 handelt es sich beispielsweise um einen sogenannten Triathlonlenker. Dieser weist entsprechend einem Rennradlenker oder einem herkömmlichen Lenker ein Querelement 12 auf. Mit dem Querelement 12 sind an den äußeren Seiten Greifelemente 14 verbunden, die üblicherweise Bremsgriffe aufweisen. Zwischen den beiden Greifelementen 14 sind in Fahrtrichtung 16 angeordnete Längsträger 18 mit dem Querelement 12 verbunden. An den freien Enden der Längsträger 18 sind schräg nach oben weisende Greifelemente 20 vorgesehen. Mit den freien Enden der Greifelemente 20 ist üblicherweise ein Schaltelement verbunden. Auf einer Oberseite 22 des Querelements 12 können zusätzlich nicht dargestellte Abstützelemente für die Unterarme vorgesehen sein. Auf den Abstützelementen werden die Unterarme beim Greifen der Greifelemente 20 abgestützt. Das Querelement 12 weist im dargestellten Ausführungsbeispiel eine Höhe auf, die geringer als die Ausdehnung in Fahrtrichtung 16 ist. Das Querelement 12 ist im Querschnitt (Fig. 3) tropfenförmig ausgebildet, so dass das Querelement 12 eine gute Aerodynamik aufweist, auch wenn der Flüssigkeitsaufbewahrungsbehälter 10 nicht mit dem Querelement 12 verbunden ist.

An einer Unterseite 24 des Querelements 12 ist der Flüssigkeitsaufbewahrungsbehälter 10 vorgesehen. Ein in Fahrtrichtung 16 weisender vorderer Abschnitt 26 (Fig. 3) des Flüssigkeitsaufbewahrungsbehälters 10 umgreift eine Vorderseite 28 des Querelements 12. Hierbei ist insbesondere, wie aus Fig. 3 ersichtlich, der Flüssigkeitsaufbewahrungsbehälter 10 derart ausgestaltet, dass er zusammen mit dem Querelement 12 im Querschnitt tropfenförmig ist.

Anstatt der Befestigung des Flüssigkeitsaufbewahrungsbehälters 10 an der Unterseite 24, bei der es sich um eine Querseite handelt, kann der Flüssigkeitsaufbewahrungsbehälter auch an einer anderen Querseite wie beispielsweise der Oberseite 22 oder der Vorderseite 28 des Querelements 12 befestigt sein.

Der Übergang zwischen dem Querelement 12 und dem Flüssigkeitsaufbewahrungsbehälter 10 ist fließend, d. h. stufenfrei. Hierdurch sind Verwirbelungen in diesem Bereich vermieden. An einer Rückseite 30 ist vorzugsweise zwischen dem Querelement 12 und dem Flüssigkeitsaufbewahrungsbehälter 10 ebenfalls ein stufenfreier fließender Übergang vorgesehen. Ggf. kann in diesem Bereich ein Abrisskante zum Abreißen der über die Oberseite und Unterseite des Lenkers strömenden Luft vorgesehen sein.

Ferner weist der Flussigkeitsaufbewahrungsbehälter 10 eine im dargestellten Ausführungsbeispiel seitlich neben einem Lenkervorbau 32 vorgesehene Öffnung auf, durch die ein Trinkhalm in den Flüssigkeitsaufbewahrungsbehälter 10 gesteckt werden kann.

Zur Fixierung des Flüssigkeitsaufbewahrungsbehälters 10 an dem Querelement 12 ist eine Befestigungsvorrichtung 33 vorgesehen, die in bevorzugter Ausführungsform einen mit einer Oberseite des Flüssigkeitsaufbewahrungsbehälters 10 verbundenen Gewindestift 34 aufweist. Der Gewindestift 34 ragt in eine Öffnung 36 des Querträgers 12. Zur Fixierung ist eine Mutter 38 vorgesehen, die in einer Vertiefung 40 des Querelements angeordnet ist, um die aerodynamischen Beeinträchtigungen zu minimieren.

Das Querelement 12 ist in Vorderansicht (Fig. 2) gekrümmt, so dass die Greifelemente 14 tiefer liegen als die weiter innen angebrachten Längsstege 18, an denen sodann die nach oben abstehenden weiteren Greifelemente 20 angeordnet sind. Dies liegt darin begründet, dass beim Umgreifen von den Greifelementen 14 auf die Greifelemente 20 oder umgekehrt eine möglichst geringe Gewichtsverlagerung des Fahrers erfolgen soll.

In dem Lenkervorbau 32, der in besonders bevorzugter Ausführungsform einstückig mit dem Querelement 12 ausgebildet ist, ist eine Öffnung 41 vorgesehen, durch die die Brems- und Schaltkabel geführt werden können.

Bei einer weiteren bevorzugten Ausführungsform (Fig. 4) sind ähnliche und identische Bauteile mit den selben Bezugszeichen gekennzeichnet.

Der einzige Unterschied der in Fig. 4 dargestellten Ausführungsform besteht in der Ausgestaltung des Flüssigkeitsaufbewahrungsbehälters 42. Der Flüssigkeitsaufbewahrungsbehälter 42 weist im Gegensatz zu dem Flüssigkeitsaufbewahrungsbehälter 10 über die gesamte Breite im wesentlichen nicht den selben Querschnitt, insbesondere die selbe Höhe auf. Vielmehr weist der Flüssigkeitsaufbewahrungsbehälter eine im wesentlichen horizontal verlaufende Unterseite 44 auf, die im Mittelbereich zusätzlich abgesenkt ist, so dass sich ein Sammelbereich 46 bildet. Der Sammelbereich 46, in dem sich die in dem Flüssigkeitsaufbewahrungsbehälter 42 enthaltene Flüssigkeit zumindest bei Geradeausfahrt sammelt, ist vorzugsweise der Befestigungseinrichtung 33 gegenüberliegend angeordnet. Die Befestigungseinrichtung 33 ist in diesem Ausführungsbeispiel vorzugsweise derart ausgebildet, dass der Trinkhalm durch die Befestigungseinrichtung 33 bzw. den zylindrischen, insbesondere mit einem Gewinde versehene Ansatz 34 geführt ist. Auch die in Fig. 4 dargestellte Ausführungsform des Flüssigkeitsaufbewahrungsbehälters ist im Querschnitt vorzugsweise tropfenförmig.

## Patentansprüche

1. Fahrradlenker, insbesondere Rennradlenker, mit
einem quer zur Fahrtrichtung angeordnetem Querelement (12), das mit zwei Greifelementen (14, 20) verbunden ist,
**dadurch gekennzeichnet, dass**
mit dem Querelement (12) ein quer zur Fahrtrichtung ausgerichteter, aerodynamisch ausgebildeter Flüssigkeitsaufbewahrungsbehälter (10, 42) lösbar verbunden ist,
wobei das Querelement (12) zusammen mit dem Flüssigkeitsaufbewahrungsbehälter (10, 42) im verbundenen Zustand einen aerodynamischen Querschnitt aufweist, und
wobei das Querelement (12) einen aerodynamischen Querschnitt aufweist.

2. Fahrradlenker nach Anspruch 1, **dadurch gekennzeichnet, dass** eine Querseite (28) des Querelements (12) stufenfrei in eine Querseite des Flüssigkeitsaufbewahrungsbehälters (10) übergeht.

3. Fahrradlenker nach Anspruch 1 oder 2, **dadurch gekennzeichnet, dass** das Querelement (12) zusammen mit dem Flüssigkeitsaufbewahrungsbehälters (10, 42) im verbundenen Zustand einen aerodynamischen tropfenförmigen Querschnitt aufweist.

4. Fahrradlenker nach einem der Ansprüche 1 bis 3, **dadurch gekennzeichnet, dass** das Querelement (12) einen aerodynamischen tropfenförmigen Querschnitt aufweist.

5. Fahrradlenker nach einem der Ansprüche 1 bis 4, **dadurch gekennzeichnet, dass** eine Rückseite (30) des Querelements (12) stufenfrei in eine Rückseite des Flüssigkeitsaufbewahrungsbehälters (10, 42) übergeht.

6. Fahrradlenker nach einem der Ansprüche 1 bis 5, **dadurch gekennzeichnet, dass** die Rückseite (30) des Querelements (12) und/oder des Flüssigkeitsaufbewahrungsbehälters (10, 42) eine Abrisskante aufweist.

7. Fahrradlenker nach einem der Ansprüche 1 bis 6, **gekennzeichnet durch** eine Öffnung in dem Flüssigkeitsaufbewahrungsbehälter (10, 42) zum Einführen eines Trinkhalms (34).

8. Fahrradlenker nach einem der Ansprüche 1 bis 7, **gekennzeichnet durch** eine Befestigungseinrichtung (33) zum Befestigen des Flüssigkeitsaufbewahrungsbehälters (10, 42) an dem Querelement (12).

9. Fahrradlenker nach Anspruch 7 oder 8, **dadurch gekennzeichnet, dass** die Trinkhalm-Öffnung in die Befestigungseinrichtung (33) integriert ist.

10. Fahrradlenker nach einem der Ansprüche 1 bis 9, **gekennzeichnet durch** einen Sammelbereich (46), in dem sich die gesamte im Flüssigkeitsaufbewahrungsbehälter (42) vorhandene Flüssigkeit sammelt.

11. Fahrradlenker nach einem der Ansprüche 1 bis 10, **dadurch gekennzeichnet, dass** das Querelement (12) mit einem Lenkervorbau (32) einstückig ausgebildet ist.

12. Fahrradlenker nach Anspruch 11, **dadurch gekennzeichnet, dass** der Vorbau (32) eine Einführöffnung (41) zum Einführen von Schalt-und/oder Bremszügen aufweist.

## Claims

1. Bicycle handlebar, in particular handlebar for racing bicycles, comprising
a cross element (12) arranged transverse to the direction of travel, said element being connected to two gripping elements (14, 20),
**characterized in that**
a liquid storage container (10, 42) is releasably connected to the cross element (12), said container being directed transverse to the direction of travel and being of aerodynamic design,
said cross element (12) and said liquid storage container (10, 42) together having an aerodynamic cross section when assembled, and
said cross element (12) has an aerodynamic cross section.

2. Bicycle handlebar of claim 1, **characterized in that** a transversal side (28) of the cross element (12) smoothly passes into a transversal side of the liquid storage container (10).

3. Bicycle handlebar of claim 1 or 2, **characterized in that** said cross element (12) and said liquid storage container (10, 42) together have an aerodynamic drop-shaped cross section when assembled.

4. Bicycle handlebar of one of claims 1 to 3, **characterized in that** the cross element (12) has an aerodynamic drop-shaped cross section.

5. Bicycle handlebar of one of claims 1 to 4, **characterized in that** a rear side (30) of the cross element (12) smoothly passes into a rear side of the liquid storage container (10, 42).

6. Bicycle handlebar of one of claims 1 to 5, **characterized in that** the rear side (30) of the cross element (12) and/or of the liquid storage container (10, 42) has a trailing edge.

7. Bicycle handlebar of one of claims 1 to 6, **characterized by** an opening in the liquid storage container (10, 42) for the insertion of a drinking straw (34).

8. Bicycle handlebar of one of claims 1 to 7, **characterized by** a fastening device (33) for the fastening of the liquid storage container (10, 42) to the cross element (12).

9. Bicycle handlebar of claim 7 or 8, **characterized in that** the opening for the drinking straw is integrated in the fastening device (33).

10. Bicycle handlebar of one of claims 1 to 9, **characterized by** a collection portion (46) where all the liquid present in the liquid storage container (42) collects.

11. Bicycle handlebar of one of claims 1 to 10, **characterized in that** the cross element (12) is formed integrally with a handlebar stem (32).

12. Bicycle handlebar of claim 11, **characterized in that** the stem (32) has an insertion opening (41) for the insertion of shift and/or brake cables.

## Revendications

1. Guidon de vélo, en particulier guidon de vélo de course, avec
un élément transversal (12), disposé transversalement à la direction de déplacement, qui est raccordé à deux éléments de préhension (14, 20), **caractérisé en ce**
**qu'**un récipient de stockage de liquide (10, 42) de constitution aérodynamique, orienté transversalement à la direction de déplacement, est raccordé de façon amovible à l'élément transversal (12),
l'élément transversal (12) présentant, de concert avec le récipient de stockage de liquide (10, 42), à l'état raccordé, une section transversale aérodynamique, et
l'élément transversal (12) présentant une section transversale aérodynamique.

2. Guidon de vélo selon la revendication 1, **caractérisé en ce qu'**un côté transversal (28) de l'élément transversal (12) passe de façon continue au côté transversal du récipient de stockage de liquide (10).

3. Guidon de vélo selon la revendication 1 ou 2, **caractérisé en ce que** l'élément transversal (12) présente, de concert avec le récipient de stockage de liquide (10, 42), dans l'état raccordé, une section transversale aérodynamique en forme de goutte.

4. Guidon de vélo selon l'une des revendications 1 à 3, **caractérisé en ce que** l'élément transversal (12) présente une section transversale aérodynamique en forme de goutte.

5. Guidon de vélo selon l'une des revendications 1 à 4, **caractérisé en ce qu'**un côté arrière (30) de l'élément transversal (12) passe de façon continue au côté arrière du récipient de stockage de liquide (10, 42).

6. Guidon de vélo selon l'une des revendications 1 à 5, **caractérisé en ce que** le côté arrière (30) de l'élément transversal (12) et/ou du récipient de stockage de liquide (10, 42) présente une arête de rupture.

7. Guidon de vélo selon l'une des revendications 1 à 6, **caractérisé par** une ouverture dans le récipient de stockage de liquide (10, 42) pour l'introduction d'une paille (34).

8. Guidon de vélo selon l'une des revendications 1 à 7, **caractérisé par** un dispositif de fixation (33) pour la fixation du récipient de stockage de liquide (10, 42) sur l'élément transversal (12).

9. Guidon de vélo selon la revendication 7 ou 8, **caractérisé en ce que** l'ouverture pour la paille est intégrée dans le dispositif de fixation (33).

10. Guidon de vélo selon l'une des revendications 1 à 9, **caractérisé par** une zone de retenue (46) dans laquelle se rassemble la totalité du liquide présent dans le récipient de stockage de liquide (42).

11. Guidon de vélo selon l'une des revendications 1 à 10, **caractérisé en ce que** l'élément transversal (12) est constitué d'une seule pièce avec une potence (32).

12. Guidon de vélo selon la revendication 11, **caractérisé en ce que** la potence (32) présente une ouverture d'introduction (41) pour l'introduction de câbles de commande et/ou de freins.
